# FASCICULE DE BREVET EUROPEEN

(11) **EP 0 493 195 B1**
(45) Date de publication et mention de la délivrance du brevet: **28.06.1995**
(21) Numéro de dépôt: 91403433.5
(22) Date de dépôt: 17.12.1991
(51) Int. Cl.: B64C 27/48

(54) **Tête de rotor articulé de giravion à manchons intermédiaires entre moyeu et pâles**
Gelenkrotorkopf eines Drehflügelflugzeuges mit einem Blatturwurzelanschlussstück
Rotorcraft articulated rotor head with intermediate blade root cuff

(30) Priorité: 27.12.1990 FR 9016360
(43) Date de publication de la demande: 01.07.1992
(73) Titulaire: AEROSPATIALE Société Nationale Industrielle, 75781 Paris Cédex 16 (FR)
(72) Inventeur: Mouille, René Louis, F-13100 Aix-en-Provence (FR)
(74) Mandataire: Phélip, Bruno

(56) Documents cités:
- EP-A- 0 080 920
- EP-A- 0 201 008
- US-A- 4 568 245

## Description

La présente invention se rapporte aux rotors de giravion, et elle concerne plus particulièrement des rotors articulés dont les pales sont raccordées au corps de moyeu de la tête de rotor au moyen d'organes de liaison du type manchon intermédiaire.

L'invention se rapporte notamment aux rotors d'hélicoptères, dont chaque pale est reliée au moyeu du rotor par des moyens de liaison comprenant avantageusement une articulation unique de battement, de traînée et de pas et qui sont équipés d'un dispositif de rappel élastique et d'amortissement des pales en traînée.

Dans le meilleur mode de réalisation du rotor auquel se rapporte l'invention, l'unique articulation de battement, de trainée et de pas que comprennent les moyens d'articulation de chaque pale du rotor au moyeu, est avantageusement une articulation du type communément appelé "butée sphérique lamifiée". Cette butée sphérique lamifiée comprend un empilement alterné et en forme de portion de sphère, qui est disposé entre deux armatures rigidement liées l'une au moyeu, et l'autre à un manchon intermédiaire de liaison du pied de pale au moyeu. L'empilement alterné et en forme de portion de sphère est constitué de coupelles rigides et de lames d'un matériau élastique qui transmet en compression les efforts centrifuges de la pale sur le corps de moyeu et autorise les oscillations angulaires de la pale en battement, en traînée et en pas.

Pour adapter la fréquence propre des pales en traînée et amortir les oscillations angulaires des pales en trainée, le rotor auquel se rapporte l'invention comporte des éléments de rappel élastique à amortissement incorporé qui sont reliés entre chaque pale et le moyeu ou entre pales voisines, et qui sont conformés sous forme de tirants. Selon l'invention, chaque ensemble de rappel élastique à amortissement incorporé peut avoir une architecture qui correspond à la description ci-après. Les ensembles de rappel élastique avec amortissement incorporé ont une forme de tirant, qui comprend une plaque centrale allongée plane et rigide, qui est engagée au moins partiellement entre deux plaques externes allongées planes et rigides et qui sont dans la même direction. La plaque centrale est liée à chacune des deux plaques externes par une couche d'un matériau visco-élastique qui est adhérisée aux deux plaques qu'elle relie. La plaque centrale présente un embout à oeil de pivotement qui s'étend d'un côté, dans la direction des plaques allongées, et au-delà des plaques externes ; tandis que les plaques externes présentent de l'autre côté, un embout à oeil de pivotement, qui s'étend dans la direction des plaques allongées au-delà de la plaque centrale.

Des exemples de rotors de giravion, munis d'élément de liaison entre chaque pale et le corps de moyeu, sont décrits dans le brevet 2.456.034, et entre pales dans la demande de brevet français 88.05 816, l'un et l'autre au nom de la demanderesse, ainsi que dans le brevet américain US-4.568.246. Le document FR-A-2 456 034 montre une tête de rotor selon le préambule de la revendication 1.

Dans le brevet français 2.456.034, qui est une addition au brevet français 2.427.251, le moyeu comporte un fût central, qui prolonge le mât du rotor, et qui porte un plateau radial supérieur et un plateau radial inférieur. Le support radial externe de chaque butée sphérique lamifiée de retenue d'articulation d'une pale sur le moyeu est encastré entre les bords radiaux des deux plateaux. Ce support radial externe est fixé directement sur ses bords, à la façon d'une entretoise rigide. Le pied de chaque pale est réuni à l'autre support rigide, ou support radial interne, de la butée lamifiée sphérique correspondante par une chape, qui est disposée radialement. Cette chape a deux branches radiales, qui sont espacées l'une dans l'autre dans la direction de l'axe du rotor, et qui sont évidées pour le libre passage du support radial externe de la butée sphérique lamifiée, qui est partiellement logée entre les branches de cette chape radiale et entre les deux plateaux radiaux du moyeu. Chaque contre-fiche de rappel en traînée est également réalisée dans ce document sous la forme d'un empilement alterné de plaques allongées rigides et de couches de matériaux visco-élastiques, et elle est accouplée par ses deux extrémités en direction longitudinale, et par l'intermédiaire de rotules, d'une part sur la chape associée à la pale correspondante et, d'autre part, en un point du fût central du moyeu. Chaque pale comporte au moins une entretoise, qui est fixée entre les deux plaques, dans l'intervalle entre leurs évidements, et les moyens de fixation du pied de la pale correspondante aux extrémités les plus éloignées du moyeu des plaques de ladite chape. Les plaques de la chape sont en partie encastrées dans l'autre élément rigide de la butée sphérique correspondante auquel elles sont fixées. Les deux plaques de chaque pale ainsi que l'entretoise sont assujetties entre elles par des axes de fixation, qui sont sensiblement perpendiculaires au plan du rotor. Enfin, chaque entretoise possède un prolongement sur lequel est monté l'axe d'articulation de l'extrémité de levier de commande du pas de ladite pale. Cette entretoise comporte également du côté opposé un autre prolongement sur lequel est fixé la rotule de l'extrémité de la contre-fiche correspondante.

Dans la demande de brevet français n° 88.05 816, le rotor de giravion comprend un moyeu auquel chaque pale du rotor est retenu par un organe de liaison, qui est solidaire de la pale, et qui est relié au moyeu par l'intermédiaire de moyens d'articulation, qui autorisent les oscillations angulaires de la pale autour de trois axes perpendiculaires et concourants de battement, de traînée et de pas. Le rotor comprend également un dispositif de liaison interpale, qui comporte des tirans allongés de rappel élastique avec amortissement incorporé. Ces tirants sont en nombre égal au nombre de pales, et ils sont montés sensiblement en couronne autour du moyeu. Chaque organe de liaison d'une pale au moyeu est une chape radiale, qui comprend une branche supérieure et une branche inférieure, qui sont disposées en regard l'une de l'autre, et qui sont espacées l'une de l'autre dans la direction de l'axe de traînée de la pale correspondante. Les extrémités radiales externes forment une fourche dans laquelle est engagé le pied de la pale correspondante. Les extrémités radiales internes de cette chape sont solidarisées à une armature radiale interne des moyens d'articulation sur le moyeu du rotor. Ces moyens d'articulation comprennent également une armature radiale externe qui est fixée sur le moyeu, et qui est disposée entre les deux branches supérieure et inférieure de la chape. Une branche relie ces deux branches du côté des extrémités radiales externes, et elle sert de point d'attache aux deux tirants adjacents. Enfin, une pièce entretoise est disposée entre les branches inférieure et supérieure dans leur partie médiane, de manière à avoir un prolongement sur lequel est monté le levier de commande de pas.

Le brevet américain US-4.568.246 concerne un concept de moyeu de giravion particulier, qui est constitué par un ensemble d'éléments en matériau composite. Le corps du moyeu est ainsi constitué par des pièces circulaires munies de parties rayonnantes, et par des pièces assemblées à sa périphérie, et qui sont raccordées à chaque pale par un élément de jonction. Chaque élément de jonction comporte deux étriers : un étrier interne raccordé au corps du moyeu, et un étrier externe lié à la pale correspondante. L'étrier interne a deux branches qui sont raccordées par un fond, qui pénètrent à l'intérieur du corps de moyeu avec lequel il est solidaire. L'étrier externe comporte également deux branches symétriques qui sont raccordées par une paroi verticale. Chacune des branches de l'étrier interne se termine à son extrémité par deux ailes parallèles de manière à constituer une mortaise, qui est destinée à recevoir le tenon constitué par l'extrémité correspondante de la branche de l'étrier externe. Chaque branche de l'étrier externe pénètre ainsi à l'intérieur des extrémités de l'étrier interne avec lesquels elles sont solidarisées au moyen d'éléments de fixation du type boulons. D'autre part, l'étrier externe se termine du côté de la pale par des extrémités plates munies de trous, qui sont destinées à servir pour l'assemblage entre cet étrier externe et la pale correspondante.

Les différents dispositifs décrits dans les brevets ci-dessus font ainsi appel à des rotors de giravion, qui sont munis d'éléments de jonction entre chaque pale et le corps de moyeu. Chacun de ces éléments de jonction, qui peut être métallique ou en matériau composite, est constitué par un grand nombre de pièces élémentaires qui sont reliées les unes aux autres par des moyens d'assemblage tels que des boulons, qui peuvent faire éventuellement office d'axes d'articulation.

On connait également des rotors de giravion qui font appel à des structures, dont les caractéristiques sont améliorées par la disposition à la périphérie de celles-ci de pièces du type sangle, qui sont destinées à renforcer l'élément de base ; comme c'est le cas dans les brevets français n° 2.529.860 et 2.584.996 au nom de la demanderesse.

Le brevet français 2.529.860 décrit un rotor de giravion dans lequel le corps de moyeu est constitué par deux plateaux en matériau composite, qui sont reliés l'un à l'autre par un fût central disposé en entretoise. Ce moyeu est accouplé au pied de chaque pale par l'intermédiaire d'une butée sphérique lamifiée, et d'une contre-fiche de rappel élastique et d'amortissement de la pale en traînée. Chacun des plateaux supérieur et inférieur est réalisé en matériau composite et comprend un flasque qui est entouré d'une ceinture de renforcement.

Dans le brevet français 2.584.996, le mât rotor et le moyeu sont réalisés sous la forme d'un mât-moyeu tubulaire intégré, d'une seule pièce, qui présente pour chaque pale du rotor, une ou deux ouvertures latérales qui sont traversées respectivement par l'une des deux branches radiales internes, ou par ses deux branches d'une pièce d'attache fourchue de la pale au moyeu. Les extrémités radiales internes des deux branches sont rigidement liées au support radial interne de la butée lamifiée sphérique correspondante, qui est au moins partiellement logée à l'intérieur du mât-moyeu tubulaire intégré, de sorte que son support radial externe soit fixé à la partie périphérique du mât-moyeu tubulaire intégré. Le mât tubulaire intégré est conformée en jante qui est entourée d'une ceinture composite de renforcement, et à laquelle l'ouverture pour chaque pale, ou chacune des deux ouvertures pour chaque pale, est adjacente. Chaque pale est reliée au corps du moyeu par un élément de jonction, qui est constitué par deux plaques principales, qui sont reliées l'une à l'autre par des éléments d'assemblage du type boulons. De plus, ces éléments de jonction comportent en leur partie centrale une entretoise qui est fixée également par des boulons sur les deux plaques, et qui comporte un prolongement destiné à recevoir le levier de commande de pas. Ce dernier type de rotor de giravion fait également appel à des éléments de jonction, qui sont relativement complexes et constitués par un grand nombre de pièces solidarisées les unes aux autres par des éléments d'assemblage.

Le but de la présente invention est de remédier aux différents inconvénients décrits ci-dessus, et de proposer une architecture de rotor de giravion dans laquelle le corps de moyeu est relié à chacune des pales par des éléments de jonction qui ont la masse la plus faible possible et la forme la plus simple possible de manière à pouvoir la combiner avec des moyens d'amélioration des caractéristiques mécaniques du type ceinture de renforcement et de sécurité. L'invention concerne une tête de rotor de giravion selon la revendication 1.

Le rotor de giravion selon l'invention est du type comportant un corps de moyeu raccordé à chaque pale du rotor par l'intermédiaire d'un organe de liaison. Chacun de ces organes de liaison est solidaire de la pale correspondante, et il est relié au moyeu par des moyens d'articulation, qui permettent des oscillations angulaires de la pale correspondante autour des trois axes de battement, de traînée, et de pas. Chacune de ces pales est munie d'une contrefiche de rappel élastique en traînée avec amortissement incorporé, dont l'une des extrémités est reliée à cette pale, et dont l'autre extrémité est raccordée au moyeu ou à une autre pale. D'après l'invention, chaque organe de liaison est constitué par un manchon intermédiaire, qui comporte une partie interne en forme d'anneau, et une partie munie d'au moins une chape double. Le manchon intermédiaire est un seul et même ensemble monobloc, dont l'anneau entoure les moyens d'articulation avec lesquels il est solidarisé, et dont la ou les chapes doubles coopèrent avec des moyens de solidarisation de la pale.

Avantageusement, chacun des manchons intermédiaires est constitué par un corps, qui comporte d'une part un anneau rigide dont l'axe longitudinal correspond à l'axe de la pale, et d'autre part, de deux chapes doubles, qui sont disposées de part et d'autre de cet axe longitudinal. La chape double supérieure est située sensiblement au-dessus de l'anneau, et la chape double inférieure est située sensiblement en-dessous de cet anneau.

Afin de coopèrer au mieux avec chacune des pales, le manchon intermédiaire correspondant comporte deux chapes doubles, ce qui permet de pouvoir replier les pales du rotor en désolidarisant une des deux chapes doubles avec la pale correspondante et en faisant tourner la pale autour de la chape non désolidarisée.

Afin d'améliorer les caractéristiques de tenue mécanique de chacun de ces manchons intermédiaires à l'encontre des efforts centrifuges générés par la rotation des pales, l'anneau comporte un logement qui est aménagé à sa périphérie de manière à recevoir une sangle ceinture de renfort. De la même façon, la chape double supérieure peut également comporter un logement aménagé à sa périphérie de manière à recevoir aussi une sangle ceinture de renfort ; ainsi que la chape double inférieure qui peut comporter un logement aménagé à sa périphérie de manière à recevoir elle aussi une sangle ceinture de renfort et de sécurité. Ces différentes ceintures de renfort donnent une plus grande sécurité en service et un caractère "fail-safe", et cela essentiellement à l'encontre des efforts de traction centrifuge qui la sollicitent en fatigue temporaire à un niveau de contraintes très élevées.

Selon une première variante de l'invention, ces différentes ceintures de renfort peuvent être disposées dans un logement qui est de section rectangulaire. Selon une autre variante de l'invention, ces ceintures de renfort sont alors disposées dans un logement qui est de section carrée.

Dans les différentes configurations décrites ci-dessus, le manchon intermédiaire est en métal, de préférence en acier ou en alliage de titane.

Afin de tirer le meilleur parti de cette structure qui comporte des ceintures de renfort, celles-ci peuvent être constituées par un enroulement multi-couche de fins fils métalliques, par exemple en acier à très haute résistance mécanique, ledit enroulement étant enrobé dans une matière souple, par exemple un élastomère. De préférence, les ceintures sont réalisées en matériau filamentaire composite constitué par des fibres unidirectionnelles à haute résistance mécanique en traction agglomérées par une résine synthétique thermodurcissable et mises en place par bobinage. Préférablement, ce matériau filamentaire composite est constitué par des stratifils de type aramide qui sont agglomérés par une résine de type époxy.

Dans une structure préférentielle de l'invention, le rotor de giravion a des manchons intermédiaires, qui sont reliés au moyeu par des moyens d'articulation réalisés sous la forme d'une butée sphérique lamifiée. Chaque butée sphérique lamifiée a une armature interne qui est solidaire de ce manchon intermédiaire, et a une armature externe qui est solidaire du corps du moyeu.

Avantageusement, le corps du moyeu d'un rotor de giravion selon l'invention comporte deux éléments dont les plans sont sensiblement parallèles l'un par rapport à l'autre et perpendiculaires à l'axe du mât-rotor. Ces deux éléments sont séparés l'un de l'autre par un espace qui a une distance suffisante de façon à permettre de loger les butées sphériques lamifiées. Les deux éléments peuvent être des anneaux : un anneau externe et un anneau interne formant chacun une jante rigide, et qui sont reliés par une paroi mince de forme sensiblement cylindrique. Cette paroi mince est disposée à la périphérie de ces anneaux, et elle comporte au moins autant d'ouvertures qu'il y a de pales. Chaque ouverture a des dimensions suffisantes pour le passage de la butée sphérique et des organes de liaison de la pale correspondante, avec leur débattement angulaire.

Dans cette configuration de l'invention, chacune des butées sphériques lamifiées a son armature externe, qui est liée aux deux anneaux par l'intermédiaire de moyens de fixation. Ces moyens de fixation consistent en au moins un axe boulonné de liaison, qui traverse chacun des alésages correspondants et l'armature externe de la butée lamifiée.

Afin de relier la butée sphérique lamifiée avec le manchon intermédiaire correspondant, cette butée sphérique lamifiée comporte une gorge qui est aménagée dans son armature interne, de manière à pouvoir recevoir l'anneau du manchon intermédiaire, qui vient ainsi se loger dans cette gorge. De plus, l'anneau est maintenu dans cette armature interne au moyen d'une plaque vissée de façon à venir se bloquer dans la gorge ménagée dans l'armature interne.

Selon l'invention, la chape double supérieure et la chape double inférieure de chacun des manchons intermédiaires comportent l'une et l'autre deux alésages. Chaque alésage de la chape double supérieure fait face à un alésage correspondant de la chape double inférieure de manière à pouvoir recevoir les moyens de solidarisation avec la pale correspondante, et cela suivant un axe qui est sensiblement parallèle à l'axe du mât-rotor.

Afin de remplir au mieux sa fonction, chacun des manchons intermédiaires comporte de plus des moyens de liaison avec le système de commande de pas, et des moyens de liaison avec l'ensemble de rappel élastique à amortissement incorporé de la pale correspondante en traînée.

Préférablement, des moyens de liaison avec le système de commande de pas sont réalisés sous la forme d'un levier de commande de pas, qui est solidaire du manchon intermédiaire correspondant, et qui coopère avec une biellette de commande de pas. Ce levier de commande de pas est constitué par une patte latérale qui s'étend selon une direction inclinée latéralement vers l'extérieur du manchon intermédiaire, et dans la direction de l'axe du moyeu. Cette patte latérale a à son extrémité deux branches qui sont situées de chaque côté de manière à constituer une chape dans laquelle est retenue la biellette de commande de pas. Selon une première variante de l'invention, ce levier de commande de pas et le manchon intermédiaire ne forment qu'une seule et même pièce monobloc. Selon une deuxième variante de l'invention, ce levier de commande de pas est une pièce indépendante, qui se monte entre deux oreilles aménagées sur le manchon intermédiaire, et avec lequel il est solidarisé au moyen de boulons.

Avantageusement, chacun des manchons intermédiaires comporte des moyens de liaison avec l'ensemble de rappel élastique à amortissement incorporé de la pale correspondante en traînée, qui sont réalisés sous la forme d'une chape coopérant avec l'extrémité correspondante de cet ensemble de rappel élastique amorti. Dans cette configuration, le manchon intermédiaire possède à sa partie inférieure et à sa partie supérieure une oreille. Ces deux oreilles constituent la chape, qui est destinée à recevoir l'articulation correspondant au point d'attache de l'extrémité de l'ensemble de rappel élastique amorti correspondant. Cette articulation du point d'attache est constituée par un axe d'articulation, qui est monté dans un trou aménagé dans chacune des oreilles. Cet axe d'articulation s'engage d'autre part dans un trou qui est disposé à l'extrémité de l'ensemble de rappel élastique correspondant. Les trous de chacune de ces oreilles ainsi que le trou de l'extrémité sont disposés de manière que l'axe d'articulation soit sensiblement parallèle à l'axe du moyeu. Selon une première variante de l'invention, la chape et le manchon intermédiaire forment une seule et même pièce monobloc. Selon une deuxième variante de l'invention, la chape est une pièce indépendante, qui se monte sur le manchon intermédiaire, et avec lequel il est solidarisé au moyen de boulons.

L'invention offre la possibilité d'avoir un rotor de giravion, dont les manchons intermédiaires comportent des butées de battement. Chacun de ces manchons intermédiaires comporte ainsi une butée haute et une butée basse de battement. La butée haute de battement est en appui direct sur l'anneau supérieur. La butée basse de battement, quant à elle, vient en appui sur un renfort métallique, qui est monté sur l'anneau inférieur par l'intermédiaire de l'axe vertical de liaison. Ce renfort métallique est disposé entre la face inférieure de cet anneau inférieur et la rondelle correspondante. De plus, ce renfort métallique est conformé et coudé pour suivre et épouser le contour inférieur et vertical de l'anneau inférieur.

Plus précisément, chacun des manchons intermédiaires a un doigt de butée haute de battement, qui est réalisé sous la forme d'un bossage. Ce bossage est sensiblement rectiligne et perpendiculaire à l'axe longitudinal de l'anneau de ce manchon intermédiaire. Le bossage est dans le prolongement de la chape supérieure, et il est raccordé à la face supérieure de l'anneau de manière que cette face de raccordement constitue la surface de butée du doigt de butée haute de battement.

Préférentiellement, chaque manchon intermédiaire a sa butée basse de battement, qui est éclipsable et qui est constituée par un levier de butée basse. Ce levier de butée basse est disposé entre deux oreilles inférieures qui sont raccordées à la chape double inférieure du manchon intermédiaire. De plus, ces deux oreilles inférieures sont sensiblement parallèles au plan longitudinal de l'anneau. Ces deux oreilles se font face de manière à constituer une chape, et elles ont chacune un trou dans lequel est monté un axe d'articulation du levier de butée basse éclipsable.

La présente invention a ainsi pour objet un rotor de giravion qui est équipé de manchons intermédiaires entre les pales et le corps du moyeu, ces manchons intermédiaires étant préférablement métalliques et pouvant être munis d'enroulement de sécurité en composite filamentaire. Cette architecture offre l'avantage de pouvoir replier les pales du rotor, en les faisant pivoter autour de l'une des deux broches d'attache de pales. Ces manchons intermédiaires selon l'invention offrent également l'avantage de comporter le levier de commande de pas d'un côté, et de l'autre côté, la chape d'attache de l'ensemble de rappel élastique en traînée avec amortissement incorporé. Ce levier et cette chape pouvant être monobloc ou rapportés sur ce manchon intermédiaire. De plus, la structure de ces manchons intermédiaires selon l'invention comporte des logements de forme ovoïdale à section carrée ou rectangulaire pour y enrouler une ceinture de renfort de fils d'acier ou de stratifils de fibres à haute résistance telles que des fibres aramides qui sont agglomérées avec une résine polymérisable. Ces ceintures de renfort apportent à cette pièce essentielle une plus grande sécurité en service et un caractère "fail-safe", c'est-à-dire essentiellement à l'encontre des efforts de traction centrifuge, qui la sollicitent à un niveau de contrainte très élevée. Les ceintures de renfort qui sont disposées d'une part sur l'anneau à l'intérieur duquel est logée la butée sphérique lamifiée, et d'autre part sur les deux chapes doubles d'attache de la pale, offrent ainsi l'avantage de permettre à la traction centrifuge de passer directement des deux ceintures de renfort des chapes d'attache de pales dans la ceinture de renfort de l'anneau comportant la butée sphérique lamifiée, et ceci par un cheminement direct et très court dans la partie métallique qui assure la liaison entre ces deux ceintures de renfort.

Enfin, sur le plan de la réalisation de ces manchons intermédiaires selon l'invention qui sont des pièces complexes, on voit que, après finition de l'usinage de la partie métallique, ces trois ceintures de renfort obtenues par enroulement peuvent se faire facilement, puisque l'accès de chaque enroulement est complètement dégagé et qu'il suffit de faire tourner la pièce sur un outillage adéquat pour réaliser ces enroulements de façon très simple.

D'autres avantages ressortiront de l'invention, qui seront mieux compris à l'aide de la description donnée ci-dessous d'exemples particuliers de réalisation, décrits à titre non limitatif, en référence aux dessins annexés sur lesquels :
- la Figure 1 est une vue en coupe axiale de l'ensemble d'une tête de rotor de giravion dans laquelle le corps de moyeu est raccordé à chaque pale par un manchon intermédiaire selon l'invention, le plan de coupe passant par le plan I-I de la Figure 2 ;
- la Figure 2 est une vue en coupe partielle de la Figure 1 par le plan II-II ;
- la Figure 3 est une vue en coupe axiale d'un manchon intermédiaire selon l'invention, le plan de coupe passant par le plan III-III de la Figure 4 ;
- la Figure 4 est une vue de dessus du manchon intermédiaire de la Figure 3.

La tête de rotor de giravion selon l'invention comporte un corps de moyeu 1 qui est raccordé à chaque pale 2 du rotor par l'intermédiaire d'un organe de liaison. Chaque organe de liaison est solidaire de la pale 2 correspondante, et il est relié au corps de moyeu par une butée lamifiée sphérique 6, qui permet des oscillations angulaires de la pale 2 en battement, traînée et pas autour du centre de la butée lamifiée 6. La tête de rotor de giravion comporte également un dispositif d'amortissement et de rappel élastique en traînée des pales. Dans ce dispositif, chaque pale est munie d'un ensemble de rappel élastique avec amortissement incorporé 20, dont l'une des extrémités est reliée à la pale 2 correspondante, et dont l'autre extrémité est reliée au moyeu ou à une pale voisine. Selon l'invention, chaque organe de liaison est constitué par un manchon intermédiaire 11 qui comporte essentiellement une partie en forme d'anneau 12, et une partie qui est munie d'au moins une chape double 14. Selon une caractéristique fondamentale de l'invention, chaque manchon intermédiaire constitue un seul et même ensemble monobloc. L'anneau 12 de cet ensemble monobloc entoure la butée lamifiée sphérique de la pale correspondante, avec l'armature interne avec laquelle il est solidarisé ; et la ou les chapes doubles 14 sont reliées à la pale 2 correspondante par des moyens de solidarisation.

Le manchon intermédiaire 11 est constitué par un corps 16, qui comporte d'une part un anneau 12, et d'autre part une ou deux chapes doubles 14. L'anneau 12 est de forme allongée, et il a son axe longitudinal qui correspond à l'axe de la pale 2. Selon le mode de réalisation de l'invention représenté sur les Figures, le corps 16 comporte deux chapes doubles 14, qui sont situées de part et d'autre du plan comportant l'axe longitudinal de ce manchon intermédiaire. La chape double 14 supérieure est disposée sensiblement au-dessus de la partie supérieure de l'anneau 12, tandis que la chape double 14 inférieure est située sensiblement en dessous de la face inférieure de cet anneau 12. Le manchon intermédiaire 11 selon l'invention est métallique, et il est de préférence réalisé en acier ou en alliage de titane.

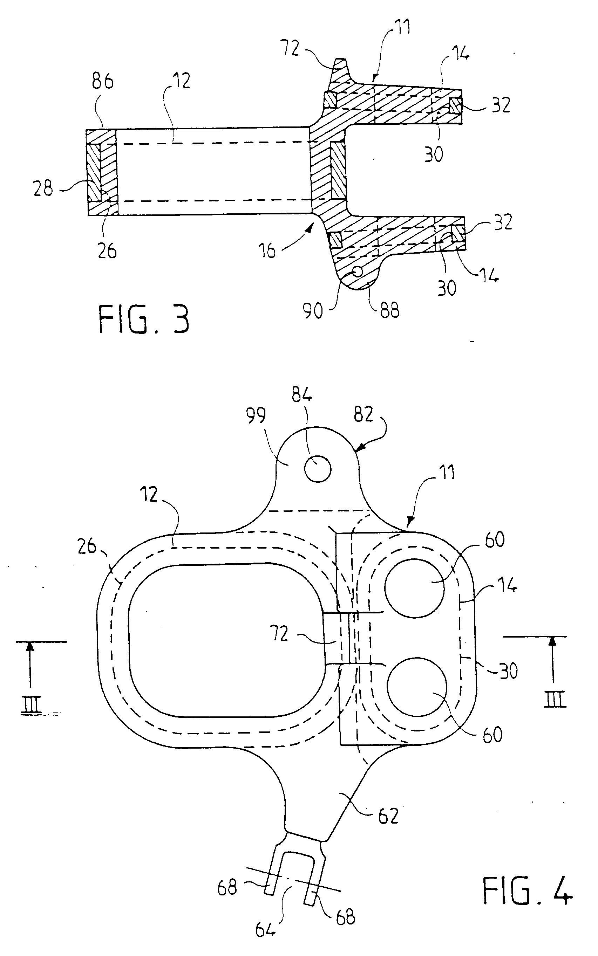

Afin d'améliorer les caractéristiques de tenue mécanique de ce manchon intermédiaire, l'anneau 12 comporte un logement 26 qui est aménagé à sa périphérie et qui débouche sur l'extérieur. Ce logement 26 est destiné à recevoir une ceinture de renfort 28. De la même façon, comme montré Figure 3, la chape double 14 supérieure comporte également un logement 30 qui est aménagé à sa périphérie et qui débouche sur l'extérieur, de manière à pouvoir recevoir une ceinture de renfort 32. Enfin, la chape double 14 inférieure peut également comporter un logement 30 qui est aménagé à sa périphérie et qui débouche sur l'extérieur, ce logement 30 étant destiné à recevoir la ceinture de renfort 32. Cette disposition d'une ceinture de renfort 28 autour de l'anneau et d'une ceinture de renfort 32 autour de chacune des deux chapes doubles supérieure 14 et inférieure 14 est particulièrement intéressante, car elle permet de passer directement dans le corps 16 et ceci dans une distance très courte, la traction centrifuge reçue sur les deux enroulements des chapes doubles 14 à la ceinture de renfort 28 de l'anneau 12. Ces ceintures de renfort 28 et 32 se montent dans le logement correspondant 26 et 30, que celui-ci soit de section rectangulaire selon une variante de l'invention, ou qu'il soit de section carrée selon une autre variante de l'invention.

Ces ceintures de renfort 28 et 32 qui sont montées comme une sangle, peuvent être réalisées par un enroulement multicouche de fins fils métalliques, par exemple en acier à très haute résistance mécanique, ledit enroulement étant enrobé dans une matière souple telle qu'un élastomère. De préférence, ces ceintures de renfort sont en un matériau filamentaire composite constitué par des fibres unidirectionnelles à haute résistance mécanique en traction agglomérées par une résine synthétique thermodurcissable et mises en place par bobinage dans le logement correspondant 26 et 30. Préférablement, ce matériau filamentaire composite est constitué par des stratifils de type aramide qui sont agglomérés par une résine de type époxy.

Chaque butée sphérique lamifiée 6 qui constitue l'unique organe d'articulation de la pale sur le corps de moyeu est d'un type bien connu, et elle comporte une partie centrale, qui est associée à une armature interne 7 et une armature externe 8. La partie centrale est constituée par un empilement alterné de couches rigides, qui sont généralement métalliques, et de couches d'élastomère en forme de calotte sphérique. Cette partie centrale est adhérisée d'une part en position radiale interne, sur la face convexe de la calotte sphérique de l'armature externe 8, et d'autre part en position radiale externe sur la face concave de la calotte sphérique de l'armature interne 7 de la butée sphérique lamifiée 6. L'armature interne 7 est solidaire du manchon intermédiaire 11 correspondant, tandis que l'armature externe 8 est solidaire du corps de moyeu 1 du rotor de giravion.

Le corps du moyeu 1 du rotor de giravion comporte deux éléments 3 et 4, qui ont des plans sensiblement parallèles l'un par rapport à l'autre, et qui sont perpendiculaires à l'axe du mât-rotor 5. Ces deux éléments 3 et 4 sont séparés l'un de l'autre par un espace et à une distance suffisante pour permettre d'y loger les butées sphériques lamifiés 6. Ces butées sphériques lamifiées 6 ont leur armature interne 7 qui est solidaire en mouvement du pied de la pale 2 correspondante, et ils ont leur armature externe 8 qui est fixe par rapport à ces deux éléments 3 et 4. Chaque armature externe 8 est disposée au voisinage de la périphérie de ces éléments 3 et 4, de manière à constituer une entretoise rigide. Les deux éléments 3 et 4 sont des anneaux : un anneau externe 3 et un anneau interne 4, qui forment chacun une jante rigide et qui sont reliés par une paroi mince 9. Cette paroi mince 9 est de forme sensiblement cylindrique, et elle est disposée à la périphérie de ces anneaux 3 et 4. De plus, cette paroi mince 9 comporte au moins autant d'ouvertures 24 qu'il y a de pales 2. Chaque ouverture 24 doit avoir des dimensions qui sont suffisantes pour le passage de la butée sphérique lamifiée 6 correspondante ainsi que pour le passage des organes de liaison de la pale 2 correspondante avec leur débattement angulaire.

Les butées sphériques lamifiées 6 sont montées dans le corps de moyeu 1 par l'intermédiaire de moyens de fixation, qui raccordent les armatures de chacune de ces butées sphériques lamifiées 6 aux deux anneaux externe 3 et interne 4 du corps de moyeu 1. Ces moyens de fixation consistent en un axe vertical de liaison, qui vient se fixer dans chacun des alésages 22 qui sont aménagés dans les anneaux externe 3 et interne 4, de manière à constituer l'entretoise rigide de chacune des butées sphériques lamifiées 6. Chaque axe vertical de liaison est constitué par une tige cylindrique 36 qui est munie à son extrémité supérieure d'une tête hexagonale 38, et à son extrémité inférieure d'un filetage 40. Ce filetage 40 reçoit une rondelle 42 et un écrou 44, qui est bloqué par une goupille 46. La tige cylindrique 36 se monte dans une entretoise 48, qui s'engage dans chacun des alésages 22 aménagés dans les anneaux externe 3 et interne 4 et qui s'engage également dans un alésage 54 qui est aménagé dans l'armature extérieure 8. La tige cylindrique 36 est munie d'une collerette 50, qui vient s'appliquer sur la face supérieure 52 de l'anneau externe 3, tandis que la rondelle 42 s'applique contre la face inférieure 18 de l'anneau interne 4, et que la tête hexagonale 38 de la tige cylindrique 36 s'applique contre la collerette 50.

Chacun des manchons intermédiaires 11 a son anneau 12 qui est solidarisé avec la butée sphérique lamifiée 6 correspondante, et il a d'autre part ses chapes doubles 14 qui sont raccordées à la pale correspondante 2. L'armature interne 7 de la butée sphérique lamifiée 6 comporte une gorge 34, dans laquelle vient se monter et se loger l'anneau 12 du manchon intermédiaire 11 correspondant. Cet anneau 12 est maintenu en position dans et contre cet élément rigide interne 7 au moyen d'une plaque 56, qui est tenue par deux vis 58 venant se fixer dans cette armature interne 7. Chaque alésage 60 de la chape double 14 supérieure fait face à l'alésage 60 correspondant de la chape double 14 inférieure. Ces alésages 60 reçoivent les moyens de solidarisation de la pale 2 suivant un axe, qui est sensiblement parallèle à l'axe du mât-rotor 5. Ces moyens de solidarisation sont constitués par des broches qui s'engagent dans les alésages 60 de la chape double 14 supérieure, puis dans la pale 2, et enfin dans les alésages 60 de la chape double 14 inférieure.

Chacun des manchons intermédiaires 12 selon l'invention comporte de plus des moyens de liaison avec le système de commande de pas de la pale correspondante 2, ainsi que des moyens de liaison avec l'ensemble 20 de rappel élastique à amortissement incorporé de la pale 2.

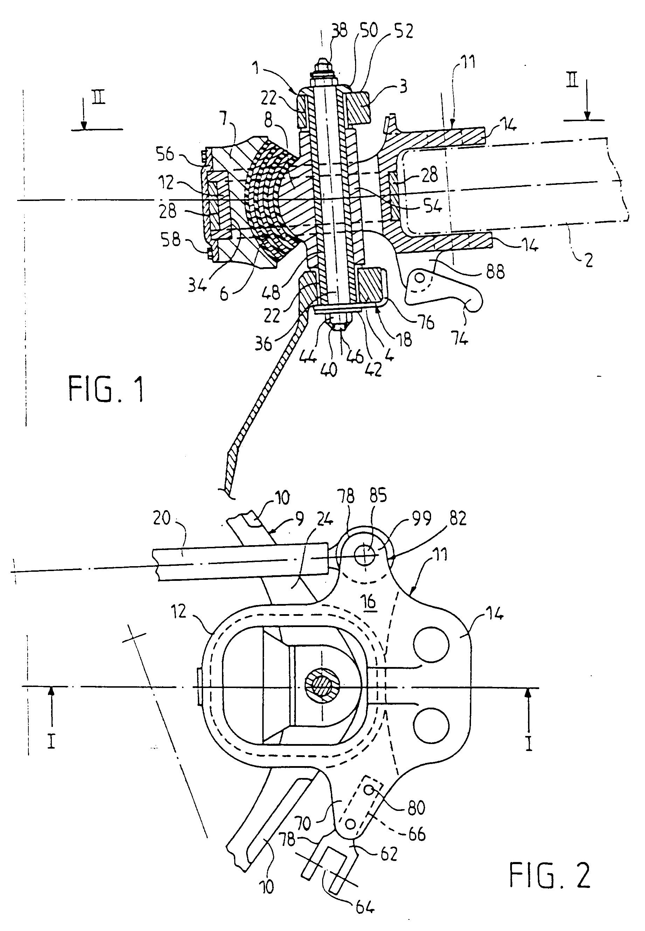

Les moyens de liaison avec le système de commande de pas sont réalisés sous la forme d'un levier de commande de pas 62, qui est solidaire du manchon intermédiaire 11, et qui coopère avec la biellette de commande de pas 64. Ce levier de commande de pas 62 est constitué par une patte latérale 66, qui s'étend vers l'extérieur du manchon intermédiaire 11, selon une direction qui est inclinée latéralement selon celle de l'axe du moyeu de rotor. Cette patte latérale 66 a à son extrémité deux branches 68, qui sont situées de part et d'autre de cette extrémité, afin de constituer une chape dans laquelle est retenue la biellette 64 de commande de pas. Dans le mode de réalisation représenté sur la Figure 4, le levier de commande de pas 62 et le manchon intermédiaire 11 forment une seule et même pièce monobloc. Dans un autre mode de réalisation représenté sur la Figure 2, le levier de commande de pas 62 est une pièce indépendante, qui se termine du côté opposé aux deux branches 66 par un tenon, qui se monte entre deux oreilles 70 du manchon intermédiaire 11. Ces deux oreilles 70 font partie intégrante du manchon intermédiaire 11 avec lequel elles forment une seule et même pièce, et elles sont solidarisées avec le levier de commande de pas 62 au moyen de boulons 80 qui pénètrent dans des trous aménagés dans le tenon de levier de commande de pas 62 et dans chacune des deux oreilles 70.

Les moyens de liaison de chacun des manchons intermédiaires 11 avec l'ensemble 20 de rappel élastique à amortissement incorporé de la pale correspondante 2 consistent en une chape 82, qui est solidaire dudit manchon intermédiaire 11, et qui coopère avec l'extrémité correspondante de l'ensemble 20 de rappel élastique à amortissement incorporé. La chape 82 est constituée par deux oreilles 99 : une oreille 99 disposée à la partie supérieure du manchon intermédiaire 11, et une oreille 99 disposée à la partie inférieure de ce même manchon intermédiaire 11. Les deux oreilles 99 se font face, de manière à ce qu'elles constituent la chape 82, qui est destinée à recevoir l'articulation correspondante du point d'attache de l'extrémité de l'ensemble 20 de rappel élastique à amortissement incorporé. Dans un premier mode de réalisation du manchon intermédiaire 11, chacune des oreilles 99 de la chape 82 font partie intégrante du manchon intermédiaire 11 avec lequel elles forment une seule et même pièce monobloc. Dans un autre mode de réalisation de l'invention, qui n'est pas représenté sur les Figures, les deux oreilles 99 qui constituent la chape 82 appartiennent à une pièce indépendante qui se monte dans le manchon intermédiaire 11, et avec lequel elle est solidarisée au moyen de boulons.

L'attache de chacun des ensembles 20 de rappel élastique à amortissement incorporé dans le manchon intermédiaire 11 correspondant est constituée par un axe d'articulation, qui est monté dans les deux oreilles 99. Plus précisément, cet axe d'articulation s'engage dans un trou 84 aménagé dans l'oreille supérieure 99, puis il pénètre dans un trou 85 aménagé dans l'extrémité de l'ensemble 20 de rappel élastique à amortissement incorporé, et enfin, il traverse un trou 84 qui est aménagé dans l'oreille 99 inférieure. Ces trous 84 et le trou 85 sont disposés de manière que l'axe d'articulation soit sensiblement parallèle à l'axe du moyeu.

Le rotor de giravion comportant des manchons intermédiaires 11 selon l'invention peut aussi avoir des butées de battement des pales, ainsi que des butées de traînée des pales.

Comme on peut le voir sur la Figure 1, le manchon intermédiaire 11 selon l'invention comporte une butée haute de battement, ainsi qu'une butée basse de battement. La butée haute de battement est en appui direct sur l'anneau externe 3 du corps de moyeu 1, tandis que la butée basse de battement vient en appui sur un renfort métallique 76, qui est monté sur l'anneau interne 4 dudit corps de moyeu 1. Ce renfort métallique 76 est monté par l'intermédiaire de l'axe vertical de liaison, c'est-à-dire de la tige cylindrique 36, et il est disposé entre la face inférieure 18 de l'anneau interne 4, et la rondelle 42. De plus, ce renfort métallique 76 est conformé et coudé pour suivre le contour inférieur et le contour vertical de cet anneau 4. Le manchon intermédiaire 11 possède à sa partie supérieure, au-dessus de la chape double supérieure 14, et du côté de l'anneau 12, un doigt 72 de butée haute de battement. Ce doigt 72 est réalisé sous la forme d'un bossage qui est sensiblement rectiligne et qui est perpendiculaire à l'axe longitudinal de l'anneau 12. Ce bossage est réalisé dans le prolongement de la chape double 14 supérieure et il est raccordé à la face supérieure 86 de l'anneau 12. Cette face de raccordement constitue la face de butée du doigt de butée 72 haute de battement , et elle vient en appui contre l'anneau supérieur 3 lors des battements de trop grande amplitude. Toujours selon la Figure 1, la butée basse de battement est du type éclipsable, et elle fait partie intégrante du manchon intermédiaire 11 selon l'invention. Cette butée basse de battement est constituée par un levier de butée basse 74, qui est disposé entre deux oreilles inférieures 88, qui appartiennent au manchon intermédiaire 11. Ces deux oreilles inférieures 88 sont raccordées à la face inférieure de la chape double inférieure 14, et elles sont sensiblement parallèles au plan longitudinal de l'anneau 12. Ces deux oreilles 88 se font face de manière à ce qu'elles constituent une chape, qui est destinée à recevoir l'articulation du levier de butée basse 74. Pour cela, chacune des deux oreilles 88 est munie d'un trou 90 ; chacun de ces trous 90 faisant face à l'autre trou 90 de manière à matérialiser un axe qui soit sensiblement perpendiculaire à l'axe longitudinal du manchon intermédiaire 11. L'axe d'articulation du levier de butée basse 74 éclipsable, est monté dans ces deux trous 90, de manière que ce levier de butée basse 74 puisse s'articuler librement autour de cet axe d'articulation tout en étant tenu axialement par ses deux oreilles 88.

Les rotors de giravion selon l'invention qui sont équipés de manchons intermédiaires 11 offrent pour ces pièces essentielles les plus grandes sécurités en service et un caractère "fail-safe" particulièrement important, et ceci essentiellement à l'encontre des efforts de traction centrifuge qui les sollicitent à un niveau de contraintes très élevé. En effet, la structure de ces manchons intermédiaires 11, qui est une structure monobloc, comporte des logements dans lesquels sont enroulées de ceintures de renfort du type ceintures de fils métalliques ou stratifils de fibres à haute résistance, agglomérées avec une résine polymérisable. L'architecture selon l'invention de ces manchons intermédiaires 11 se caractérise par la présence de trois ceintures de renfort, une ceinture de renfort pour l'anneau 12 et une ceinture de renfort pour chacune des chapes doubles 14. La présence de ces ceintures de renfort 28 et 32 améliore considérablement la tenue de la pièce, notamment à la traction centrifuge qui passe ainsi des deux ceintures de renfort 32 des chapes doubles 14 de pales 2 directement dans la ceinture de renfort 28 de l'anneau 12, c'est-à-dire la ceinture de renfort 28 de mise en charge de la butée sphérique lamifiée 6, et ceci par un cheminement direct et très court dans la partie du corps qui assure la liaison entre ces deux ceintures de renfort 32 et 28.

## Revendications

1. Tête de rotor de giravion du type comportant un corps de moyeu raccordé à chaque pale (2) du rotor par l'intermédiaire d'un organe de liaison qui est solidaire de ladite pale (2) et qui est relié au moyeu par des moyens d'articulation permettant des oscillations angulaires de la pale (2) correspondante autour de trois axes perpendiculaires et concourants de battement, de traînée, et de pas de la pale correspondante ; chaque pale (2) étant munie d'un ensemble allongé de rappel élastique en traînée avec amortissement incorporé (20), dont l'une des extrémités est reliée à la pale (2) correspondante, et dont l'autre extrémité est reliée au moyeu ou à une autre pale, l'organe de liaison comportant une partie en forme d'anneau (12), sensiblement parallèle au plan du rotor et une partie munie d'au moins une chape double (14), l'anneau (12) entourant les moyens d'articulation avec lesquels il est solidaire, et la ou les chapes doubles (14) coopèrant avec des moyens de solidarisation de la pale (2), l'organe de liaison comportant d'une part des moyens de liaison avec le système de commande de pas, réalisés sous la forme d'un levier de commande de pas (62) solidaire dudit organe de liaison et coopérant avec une biellette de commande de pas (64), et d'autre part des moyens de liaison avec l'ensemble (20) de rappel élastique en traînée à amortissement incorporé de la pale (2) correspondante, réalisés sous la forme d'une chape (82) cooperant avec l'extrémité correspondante dudit ensemble (20), caractérisée en ce que l'organe de liaison est constitué par un manchon intermédiaire (11), ledit manchon intermédiaire (11) étant un seul et même ensemble monobloc.

2. Tête de rotor selon la revendication 1, caractérisée en ce que le manchon intermédiaire (11) est en métal.

3. Tête de rotor selon la revendication 1, caractérisée en ce que le manchon intermédiaire (11) est en acier.

4. Tête de rotor selon la revendication 1, caractérisée en ce que le manchon intermédiaire (11) est en alliage de titane.

5. Tête de rotor selon la revendication 1, caractérisée en ce que le manchon intermédiaire (11) comporte deux chapes doubles (14).

6. Tête de rotor selon la revendication 5, caractérisée en ce que le manchon intermédiaire (11) est constitué par un corps (16) comportant d'une part un anneau (12) dont l'axe longitudinal correspond à l'axe de la pale (2), et d'autre part, de deux chapes doubles (14), disposées de part et d'autre de cet axe longitudinal, la chape double (14) supérieure est située sensiblement au-dessus de l'anneau (12), et la chape double (14) inférieure est située sensiblement en-dessous dudit anneau (12).

7. Tête de rotor selon la revendication 6, caractérisée en ce que l'anneau (12) comporte un logement (26) aménagé à sa périphérie de manière à recevoir une ceinture de renfort (28).

8. Tête de rotor selon la revendication 6, caractérisée en ce que les chapes doubles (14) inférieure et supérieure comportent chacune un logement (30) aménagé à leur périphérie de manière à recevoir une ceinture de renfort (32).

9. Tête de rotor selon l'une des revendications 7 et 8, caractérisée en ce que le logement (26, 30) est de section rectangulaire.

10. Tête de rotor selon l'une des revendications 7 et 8, caractérisée en ce que le logement (26, 30) est de section carrée.

11. Tête de rotor selon les revendications 7 et 8, caractérisée en ce que la ceinture de renfort (28, 32) est constituée par un enroulement multicouche de fils d'acier à très haute résistance mécanique, enroulement enrobé dans un élastomère.

12. Tête de rotor selon les revendications 7, 8, caractérisée en ce que la ceinture de renfort (28, 32) est en matériau composite filamentaire.

13. Tête de rotor selon la revendication 12, caractérisée en ce que le matériau composite filamentaire est constitué par un bobinage de stratifils de fibres minérales ou synthétiques à haute résistance mécanique en traction agglomérées par une résine synthétique polymérisée à chaud.

14. Tête de rotor selon le revendication 13, caractérisée en ce que les fibres à haute résistance mécanique de bobinage sont du type aramide et que la résine et du type époxy.

15. Tête de rotor selon l'une des revendications précédentes, caractérisée en ce que le manchon intermédiaire (11) est relié au corps de moyeu par des moyens d'articulation réalisés sous la forme d'une butée sphérique lamifiée (6) dont l'armature interne (7) est solidaire dudit manchon intermédiaire (11) et dont l'armature externe (8) est solidaire du corps de moyeu (1).

16. Tête de rotor selon la revendication 15, caractérisée en ce que l'armature interne (7) de la butée sphérique lamifiée (6) comporte une gorge (34) dans laquelle vient se loger l'anneau (12) du manchon intermédiaire (11) qui est maintenu contre ladite armature interne (7) au moyen d'une plaque (56) maintenue par deux vis (58) se fixant dans cette armature interne (7).

17. Tête de rotor selon la revendication 15, caractérisée en ce que la chape double (14) supérieure et la chape double (14) inférieure comportent l'une ot l'autre deux alésages (60), chaque alésage (60) de le chape double (14) supérieure faisant face à un alésage (60) correspondant de la chape double (14) inférieure de manière à recevoir les moyens de solidarisation de la pale (2) suivant un axe sensiblement parallèle à l'axe du mât-rotor (5).

18. Tête de rotor selon la revendication 1, caractérisée en ce que le levier de commande de pas (62) est constitué par une patte latérale (66) s'étendant selon une direction inclinée latéralement vers l'extérieur du manchon intermédiaire (11) et dans la direction de l'axe du moyeu ; ladite patte latérale (66) ayant à son extrémité deux branches (68) situées de chaque côté de manière à constituer une chape dans laquelle est retenue la biellette (64) de commande de pas.

19. Tête de rotor selon la revendication 18, caractérisée en ce que le levier de commande de pas (62) et le manchon intermédiaire (11) forment une seule et même pièce monobloc.

20. Tête de rotor selon la revendication 18, caractérisée en ce que le levier de commande de pas (62) est une pièce indépendante qui se monte entre deux oreilles (70) du manchon intermédiaire (11) avec lequel il est solidarisé au moyen de boulons (80).

21. Tête de rotor selon la revendication 1, caractérisée en ce que le manchon intermédiaire (11) possède à sa partie inférieure et à sa partie supérieure une oreille (99), les deux oreilles (99) se faisant face de manière à ce que ces deux oreilles constituent la chape (82) pour l'articulation correspondant au point d'attache de l'extrémité de l'ensemble de rappel élastique (20).

22. Tête de rotor selon la revendication 21, caractérisée en ce que l'articulation du point d'attache est constituée par un axe d'articulation monté dans un trou ménagé dans chacune des deux oreilles (99), cet axe d'articulation s'engageant dans un trou (84) disposé à l'extrémité de l'ensemble de rappel élastique (20) ; les trous (84) étant disposés de manière que l'axe d'articulation soit sensiblement parallèle à l'axe du moyeu.

23. Tête de rotor selon l'une des revendications 21 et 22, caractérisée en ce que la chape (82) et le manchon intermédiaire (11) forment une seule et même pièce monobloc.

24. Tête de rotor selon l'une des revendications 21 et 22, caractérisée en ce que la chape (82) est une pièce indépendante qui se monte sur le manchon (11) intermédiaire avec lequel il est solidarisé au moyen de boulons.

25. Tête de rotor selon l'une des revendication 1 à 24, caractérisée en ce que le manchon intermédiaire (11) comporte des butées de battement.

26. Tête de rotor selon la revendication 25, caractérisée en ce que le manchon intermédiaire (11) comporte une butée haute et une butée basse de battement ; la butée haute étant en appui direct sur l'anneau externe (3) et la butée basse venant en appui sur un renfort métallique (76) monté sur l'anneau interne (4) par l'intermédiaire de l'axe vertical de liaison entre la face inférieure (18) dudit anneau interne (4) et la rondelle (42) ; ledit renfort métallique (76) étant conformé et coudé pour suivre le contour inférieur et vertical de l'anneau interne (4).

27. Tête de rotor selon l'une des revendications 25 et 26, caractérisée en ce que le manchon intermédiaire (11) a un doigt (72) de butée haute de battement, qui est réalisé sous la forme d'un bossage sensiblement rectiligne et perpendiculaire à l'axe longitudinal de l'anneau (12), ce bossage étant dans le prolongement de la chape double (14) supérieure et étant raccordé à la chape supérieure (86) de l'anneau (12) de manière que cette face de raccordement constitue la surface de butée du doigt de butée haute de battement.

28. Tête de rotor selon l'une des revendications 25 et 26, caractérisée en ce que le manchon intermédiaire (11) a sa butée basse de battement qui est éclipsable et constituée par un levier de butée basse (74) disposé entre deux oreilles inférieures (88) raccordées à la branche inférieure de la chape double (14), et sensiblement parallèles au plan longitudinal de l'anneau se faisant pace de manière à constituer une chape, et ayant chacune un trou (90) dans lequel est monté un axe d'articulation du levier de butée basse (74) éclipsable.

## Claims

1. A gyrocraft rotor head of the type comprising a hub body connected to each blade (2) of the rotor by the use of a linking member which is integral with the said blade (2) and which is linked to the hub by articulation means allowing angular oscillations of the corresponding blade (2) around three perpendicular and convergent axes of flapping, of drag, and of pitch of the corresponding blade, each blade (2) being provided with an elongated assembly for elastic return in drag with incorporated damping (20), one of whose extremities is linked to the corresponding blade (2), and whose other extremity is linked to the hub or to another blade, the linking member comprising one part in the form of a ring (12) essentially parallel to the rotor plane, and one part provided with at least one double yoke (14), the ring (12) surrounding the means of articulation with which it is integral, and the double yoke(s) (14) cooperating with means of integration of the blade (2), the linking member comprising on the one hand means of linking with the pitch command system, provided in the form of a pitch control lever (62) integral with the said linking meter and cooperating with a pitch control rod (64) and on the other hand means of linking with the assembly (20) for elastic return in drag with incorporated damping of the corresponding blade (2), provided in the form of a yoke (82) cooperating with the corresponding extremity of the said assembly (20), characterized in that the linking member is constituted by an intermediate sleeve (11), said intermediate sleeve (11) being a single and same integral assembly.

2. The rotor head according to claim 1, characterized in that the intermediate sleeve (11) is in metal.

3. The rotor head according to claim 1, characterized in that the intermediate sleeve (11) is in steel.

4. The rotor head according to claim 1, characterized in that the intermediate sleeve (11) is in titanium alloy.

5. The rotor head according to claim 1, characterized in that the intermediate sleeve (11) comprises two double yokes (14).

6. The rotor head according to claim 5, characterized in that the intermediate sleeve (11) is constituted by a body (16) comprising on one hand a ring (12) whose longitudinal axis corresponds to the axis of the blade (2), and on the other hand two double yokes (14), arranged on either side of this longitudinal axis, the upper double yoke (14) being situated substantially above the ring (12) and the lower double yoke (14) being situated substantially below the said ring (12).

7. The rotor head according to claim 6, characterized in that the ring (12) comprises a housing (26) provided into its periphery in such a manner as to receive a reinforcing belt (28).

8. The rotor head according to claim 6, characterized in that the lower and upper double yokes (14) each comprise a housing (30) provided into their periphery in such a manner as to receive a reinforcing belt (32).

9. The rotor head according to one of claims 7 and 8, characterized in that the housing (26, 30) is of rectangular cross-section.

10. The rotor head according to one of claims 7 and 8, characterized in that the housing (26, 30) is of square cross-section.

11. The rotor head according to claims 7 and 8, characterized in that the reinforcing belt (28, 32) is constituted by a multi-layer winding of steel wires with very high mechanical strength, the winding being coated in an elastomer.

12. The rotor head according to claims 7 and 8, characterized in that the reinforcing belt (28, 32) is in filamentary composite material.

13. The rotor head according to claim 12, characterized in that the filamentary composite material is constituted by a winding of rovings of mineral or synthetic fibers with high mechanical tensile strength, agglomerated by a hot-polymerized synthetic resin.

14. The rotor head according to claim 13, characterized in that the fibers with high mechanical strength for winding are of the aramid type and in that the resin is of the epoxy type.

15. The rotor head according to one of the preceding claims, characterized in that the intermediate sleeve (11) is linked to the hub body by means of articulation provided in the form of a laminated spherical stop (6) whose internal armature (7) is integral with the said intermediate sleeve (11) and whose external armature (8) is integral with the hub body (1).

16. The rotor head according to claim 15, characterized in that the internal armature (7) of the laminated spherical stop (6) comprises a groove (34) into which comes to be housed the ring (12) of the intermediate sleeve (11) which is held against the said internal armature (7) by means of a plate (56) held by two screws (58) being fixed into this internal armature (7).

17. The rotor head according to claim 15, characterized in that the upper double yoke (14) and the lower double yoke (14) each comprise two bores (60), each bore (60) of the upper double yoke (14) facing a corresponding bore (60) in the lower double yoke (14) in such a manner as to receive the means of integration of the blade (2) along an axis substantially parallel to the axis of the mast-rotor (5).

18. The rotor head according to claim 1, characterized in that the pitch control lever (62) is constituted by a lateral leg (66) extending along a direction laterally inclined toward the exterior of the intermediate sleeve (11) and in the direction of the axis of the hub, the said lateral leg (66) having at its extremity two branches (68) situated on each side in such a manner as to constitute a yoke in which the rod (64) for pitch control is retained.

19. The rotor head according to claim 18, characterized in that the pitch command lever (62) and the intermediate sleeve (11) form a single and same integral piece.

20. The rotor head according to claim 18, characterized in that the pitch control lever (62) is an independant piece which is mounted between two lugs (70) of the intermediate sleeve (11) with which it is integrated by means of bolts (80).

21. The rotor head according to claim 1, characterized in that the intermediate sleeve (11) has at its lower part and at its upper part a lug (99), the two lugs (99) being face to face in such a manner that these two lugs constitute the yoke (82) for the corresponding articulation at the attachment point of the extremity of the assembly for elastic return (20).

22. The rotor head according to claim 21, characterized in that the articulation of the attachment point is constituted by an articulation axle mounted in a hole provided into each of the two lugs (99), this articulation axle engaging in a hole (84) arranged at the extremity of the assembly for elastic return (20), the holes (84) being arranged in such a manner that the articulation axle should be substantially parallel to the axis of the hub.

23. The rotor head according to one of claims 21 and 22, characterized in that the yoke (82) and the intermediate sleeve (11) form a single and same integral piece.

24. The rotor head according to one of the claims 21 and 22, characterized in that the yoke (82) is an independent piece which is mounted on the intermediate sleeve (11) with which it is integrated by means of bolts.

25. The rotor head according to one of claims 1 to 24, characterized in that the intermediate sleeve (11) comprises flapping stops.

26. The rotor head according to claim 25, characterized in that the intermediate sleeve (11) comprises a top flapping stop and a bottom flapping stop, the top stop being supported directly on the external ring (3) and the bottom stop coming to be supported on a metallic reinforcement (76) mounted on the internal ring (4) via the vertical linking shaft between the lower face (18) of the said internal ring (4) and the washer (42), the said metallic reinforcement (76) being shaped and curved to follow the lower and vertical contour of the internal ring (4).

27. The rotor head according to one of claims 25 and 26, characterized in that the intermediate sleeve (11) has a top flapping stop finger (72), which is provided in the form of a boss substantially rectilinear and perpendicular to the longitudinal axis of the ring (12), this boss being in the extension of the upper double yoke (14) and being connected to the upper face (86) of the ring (12) in such a manner that this connecting face constitutes the stop surface of the top flapping stop finger.

28. The rotor head according to one of claims 25 and 26, characterized in that the intermediate sleeve (11) has its bottom flapping stop which is retractable and constituted by a bottom stop lever (74) arranged between two lower lugs (88) connected to the lower branch of the double yoke (14), and substantially parallel to the longitudinal plane of the ring, being face to face in such a manner as to constitute a yoke and each having a hole (90) in which is mounted an articulation shaft for the retractable bottom stop lever (74).

## Patentansprüche

1. Rotorkopf eines Drehflügelflugzeugs der Bauart mit einem Nabenkörper, der an jedem Blatt (2) des Rotors über ein Verbindungsorgan angebracht ist, das mit dem Blatt (2) verbunden ist und das an der Nabe über Gelenkmittel angebracht ist, welche Winkelschwingungen des entsprechenden Blattes (2) um drei rechtwinklig zueinander zusammentreffende Achsen für den Schlag, das Schwenken und die Steigung des entsprechenden Blattes gestatten; wobei jedes Blatt (2) mit einer länglichen federelastischen Gesamtheit im Mitnahmezustand mit integrierter Dämpfung (20) versehen ist, deren eines Ende mit dem entsprechenden Blatt verbunden ist und deren anderes Ende mit der Nabe oder einem anderen Blatt verbunden ist, wobei das Verbindungsorgan einen als Ring (12) geformten Teil, der im wesentlichen parallel zu der Ebene des Rotors liegt, sowie einen Teil aufweist, der mit wenigstens einem Doppelgabelgelenk (14) versehen ist, wobei der Ring (12) die Gelenkmittel einschließt, mit denen er verbunden ist, und wobei das oder die Doppelgabelgelenke (14) mit Verbindungsmitteln des Blattes (2) zusammenwirken, wobei das Verbindungsorgan einerseits Verbindungsmittel mit dem Steuersystem für die Steigung umfaßt, die als Steuerhebel der Steigung (62) ausgebildet ist, der mit dem Verbindungsorgan verbunden ist und mit einer Steigungsstange (64) zusammenwirkt, und andererseits Verbindungsmittel mit der federelastischen Gesamtheit (20) im Mitnahmezustand mit integrierter Dämpfung des entsprechenden Blattes (2) umfaßt, die in Form einer Gabel (8), welche mit dem entsprechenden Ende der Gesamtheit (20) zusammenwirkt, ausgebildet ist,
**dadurch gekennzeichnet**,
daß das Verbindungsorgan aus einer Zwischenmuffe (11) besteht, wobei die Zwischenmuffe ein und dieselbe einstückige Gesamtheit ist.

2. Rotorkopf nach Anspruch 1,
**dadurch gekennzeichnet**,
daß die Zwischenmuffe (11) aus Metall besteht.

3. Rotorkopf nach Anspruch 1,
**dadurch gekennzeichnet**,
daß die Zwischenmuffe (11) aus Stahl besteht.

4. Rotorkopf nach Anspruch 1,
**dadurch gekennzeichnet**,
daß die Zwischenmuffe (11) aus einer Titanlegierung besteht.

5. Rotorkopf nach Anspruch 1,
**dadurch gekennzeichnet**,
daß die Zwischenmuffe (11) zwei Doppelgabelgelenke (14) umfaßt.

6. Rotorkopf nach Anspruch 5,
**dadurch gekennzeichnet**,
daß die Zwischenmuffe (11) aus einem Körper (16) gebildet ist, der einerseits einen Ring (12), dessen Längsachse der Achse des Blattes (2) entspricht, und andererseits zwei Doppelgabelgelenke (14) aufweist, die beidseits dieser Längsachse angeordnet sind, daß das obere Doppelgabelgelenk (14) im wesentlichen über dem Ring (12) angeordnet ist und das untere Doppelgabelgelenk im wesentlichen unterhalb des Rings (12) angeordnet ist.

7. Rotorkopf nach Anspruch 6,
**dadurch gekennzeichnet**,
daß der Ring ein Lager (26) umfaßt,welches an seinem Rand in der Weise ausgebildet ist, daß es ein Verstärkungsband (28) aufnimmt.

8. Rotorkopf nach Anspruch 6,
**dadurch gekennzeichnet,**
daß das untere Doppelgabelgelenk (14) und das obere Doppelgabelgelenk jeweils einen Sitz (30) umfassen, die an ihrem Rand in der Weise ausgebildet sind, daß sie ein Verstärkungsband (32) aufnehmen.

9. Rotorkopf nach einem der Ansprüche 7 und 8,
**dadurch gekennzeichnet**,
daß der Sitz (26,30) rechteckförmig ist.

10. Rotorkopf nach einem der Ansprüche 7 und 8,
**dadurch gekennzeichnet**,
daß der Sitz (26,30) einen quadratischen Querschnitt aufweist.

11. Rotorkopf nach den Ansprüchen 7 und 8,
**dadurch gekennzeichnet**,
daß das Verstärkungsband aus einem mehrlagigen Wickel aus Stahldraht sehr hoher mechanischer Widerstandsfähigkeit gebildet ist, wobei das Wickel in ein Elastomer eingebettet ist.

12. Rotorkopf nach den Ansprüchen 7 und 8,
**dadurch gekennzeichnet**,
daß das Verstärkungsband (28,32) aus einem fadenförmigen Verbundmaterial besteht.

13. Rotorkopf nach Anspruch 12,
**dadurch gekennzeichnet**,
daß das fadenförmige Verbundmaterial aus einer Wicklung Fasermaterial aus Mineral- oder synthetischen Fasern hoher mechanischer Zugbelastbarkeit besteht, die durch ein heißpolymerisierbares Kunstharz agglomeriert sind.

14. Rotorkopf nach Anspruch 13,
**dadurch gekennzeichnet**,
daß die Fasern hoher mechanischer Widerstandsfähigkeit der Wicklung zu der Aramit-Gattung gehören und daß das Harz zu der Epoxid-Gattung gehört.

15. Rotorkopf nach einem der vorangehenden Ansprüche,
**dadurch gekennzeichnet**, daß die Zwischenmuffe (11) mit dem Nabenkörper über Gelenkmittel verbunden ist, die als sphärischer laminierter Anschlag (6) ausgebildet sind, dessen innere Stütze (7) mit der Zwischenmuffe (11) verbunden ist und dessen äußere Stütze (8) mit dem Nabenkörper (1) verbunden ist.

16. Rotorkopf nach Anspruch 15,
**dadurch gekennzeichnet,**
daß die innere Stütze (7) in dem sphärischen laminierten Anschlag (6) eine Rille (34) umfaßt, welche den Ring (12) der Zwischenmuffe (11) aufnimmt, die gegen die innere Stütze (7) mittels einer Platte (56) gehalten ist, die durch zwei Schrauben (58), die in dieser inneren Stütze (7) befestigt sind, gehalten ist.

17. Rotorkopf nach Anspruch 15,
**dadurch gekennzeichnet**,
daß das obere Doppelgabelgelenk (14) und das untere Gabelgelenk (14) beide zwei Bohrungen (60) umfassen, daß jeder Bohrung (60) des oberen Doppelgabelgelenks (14) eine entsprechende Bohrung (60) des unteren Doppelgabelgelenks in der Weise gegenübersteht, daß sie Verbindungsmittel des Blattes (2) entlang einer Achse aufnehmen, die im wesentlichen parallel zu der Achse des Rotormasts (5) verläuft.

18. Rotorkopf nach Anspruch 1,
**dadurch gekennzeichnet**,
daß der Steuerhebel der Steigung (62) durch eine Längslasche (66) gebildet ist, die sich entlang einer zu dem Äußeren der Zwischenmuffe (11) geneigten Richtung und in Richtung der Achse der Nabe erstreckt; daß die Längslasche (66) an ihrem Ende zwei Zweige (68) aufweist, die auf jeder Seite so angeordnet sind, daß sie ein Gabelgelenk bilden, von dem die Steigungsstange (64) der Steigungssteuerung gehalten wird.

19. Rotorkopf nach Anspruch 18,
**dadurch gekennzeichnet**,
daß der Steuerhebel der Steigung (62) und die Zwischenmuffe (11) einen einzigen einstückigen Block bilden.

20. Rotorkopf nach Anspruch 18,
**dadurch gekennzeichnet**,
daß der Steuerhebel der Steigung (62) ein unabhängiges Teil ist, welches zwischen zwei Flügeln (70) der Zwischenmuffe (11) angebracht ist, mit der er mittels Schraubbolzen (80) verbunden ist.

21. Rotorkopf nach Anspruch 1,
**dadurch gekennzeichnet**,
daß die Zwischenmuffe (11) an ihrem unteren Abschnitt und an ihrem oberen Abschnitt einen Flügel (99) hat, daß die beiden Flügel (99) sich in der Weise gegenüberstehen, daß die beiden Flügel das Gabelgelenk (82) für das entsprechende Gelenk an der Befestigungsstelle des Endes der federelastischen Gesamtheit (20) bilden.

22. Rotorkopf nach Anspruch 21,
**dadurch gekennzeichnet**,
daß das Gelenk des Anbringungspunkts durch eine Gelenkachse gebildet wird, die in einem Loch montiert ist, welches in jeden der beiden Flügel eingebracht ist, daß die Gelenkachse in ein Loch (84) eingreift, welches an dem Ende der federelastischen Gesamtheit (20) angeordnet ist; daß die Löcher (84) in der Weise angeordnet sind, daß die Gelenkachse im wesentlichen parallel zu der Nabenachse liegt.

23. Rotorkopf nach einem der Ansprüche 21 und 22,
**dadurch gekennzeichnet**,
daß das Gabelgelenk (82) und die Zwischenmuffe (11) ein und denselben einstückigen Block bilden.

24. Rotorkopf nach einem der Ansprüche 21 und 22,
**dadurch gekennzeichnet**,
daß das Gabelgelenk (82) ein unabhängiges Teil ist, welches auf der Zwischenmuffe (11) angebracht ist, an der es mittels Schraubenbolzen befestigt ist.

25. Rotorkopf nach einem der Ansprüche 1 - 24,
**dadurch gekennzeichnet**,
daß die Zwischenmuffe (11) Anschläge für die Schlagbewegung aufweist.

26. Rotorkopf nach Anspruch 25,
**dadurch gekennzeichnet**,
daß die Zwischenmuffe (11) einen hohen Anschlag und einen niedrigen Anschlag der Blattwegung umfaßt; daß der hohe Anschlag sich direkt auf dem Außenring (3) abstützt und der niedrige Ring auf einer metallischen Verstärkung (76) zur Abstützung gelangt, die auf dem Innenring (4) über die vertikale Verbindungsachse zwischen der unteren Seite (18) des Verbindungsrings und der Scheibe (42) montiert ist; daß die metallische Verstärkung (76) angepaßt und gekröpft ist, um der inneren und vertikalen Kontur des Innenrings (4) zu folgen.

27. Rotorkopf nach den Ansprüchen 25 und 26,
**dadurch gekennzeichnet**,
daß die Zwischenmuffe einen hohen Anschlagfinger (72) für die Schlagbewegung aufweist, der in Form eines im wesentlichen gradlinigen und rechtwinklig zu der Längsachse des Rings (12) verlaufenden Wulst ausgeführt ist, daß der Wulst sich in Verlängerung des oberen Doppelgabelgelenks befindet und an der oberen Seite (86) des Rings (12) in der Weise befestigt ist, daß diese Befestigungsseite die Oberfläche des Anschlags des oberen Anschlagfingers für die Schlagbewegung darstellt.

28. Rotorkopf nach den Ansprüchen 25 und 26,
**dadurch gekennzeichnet**,
daß die Zwischenmuffe (11) und ihr niedriger Anschlag für die Schlagbewegung, der versenkbar ist und durch einen niedrigen Anschlaghebel (74) gebildet ist, welcher zwischen zwei unteren Flügeln (88) angeordnet ist, die an dem unteren Zweig des Doppelgabelgelenks (14) angebracht sind und im wesentlichen parallel zu der Längsebene des Rings liegen, so angeordnet sind, daß sie ein Gabelgelenk bilden, und daß jeder ein Loch (90) aufweist, in dem die Schwenkachse des niedrigen versenkbaren Anschlaghebels gelagert ist.
